# EUROPEAN PATENT APPLICATION

(11) **EP 3 179 126 A1**
(43) Date of publication of application: **14.06.2017**
(21) Application number: 15275261.4
(22) Date of filing: 10.12.2015
(51) Int. Cl.: F16D 55/2255, F16D 65/00, F16D 65/40, F16D 65/52

(54) **ADJUSTER ASSEMBLY**

(71) Applicant: Meritor Heavy Vehicle Braking Systems (UK) Limited, Cwmbran, Gwent NP44 3XU (GB)
(72) Inventor: Cleary, Sean, Cwmbran, Gwent NP44 3XU (GB)
(74) Representative: Foot, Paul Matthew James

(57) **Abstract**

An adjuster assembly (150) for manually adjusting the position of a brake pad relative to a brake rotor of a disc brake, the assembly comprising: a continuous wear sensor; and a manual rewind apparatus to manually reset the position of the brake pad when replacement thereof is required; the manual rewind apparatus comprising a shaft (132) arranged to extend into a housing (120) of the disc brake; wherein the continuous wear sensor is arranged to be located within the housing (120) of the disc brake and is located proximate to the shaft (132).

## Description

### FIELD OF THE INVENTION

The present invention relates to an adjuster assembly. In particular, the present invention relates to an adjuster assembly that forms part of an adjuster system for adjusting the position of a brake pad in a disc brake. The present invention also relates to a disc brake assembly having an adjuster assembly.

### BACKGROUND OF THE INVENTION

Many air actuated disc brakes, for use on heavy vehicles, have an adjuster mechanism to set the position of friction element to account for the wear thereof. Generally, the adjuster mechanism has an adjuster shaft of which an end portion is accessible from the exterior of the brake housing and is operable to manually re-wind or de-adjust the adjuster to permit removal of worn friction elements (commonly known as brake pads) and replacement thereof with new thicker elements and/or other servicing procedures.

In some installations air actuated disc brakes are also fitted with electrical continuous wear sensors (CWS) which monitor the amount of friction material remaining on the friction elements. This enables to the operator to monitor and plan for when the friction elements will need replacing.

In conventional adjuster mechanisms having such a continuous wear sensor, the sensor is mounted to the brake housing as a standalone unit that is located away from the manual adjuster. This results in a system wherein the continuous wear sensor takes up a relatively large amount of space in the brake housing. On disc brakes that do not use a CWS this space is redundant. In other brakes it is mounted to an exterior of the housing where it may be susceptible to corrosion and damage.

The present invention aims to alleviate or overcome the problems associated with the prior art.

### SUMMARY OF THE INVENTION

A first aspect of the invention provides an adjuster assembly for manually adjusting the position of a brake pad relative to a brake rotor of a disc brake, the assembly comprising a continuous wear sensor and a manual rewind apparatus to manually reset the position of the brake pad when replacement thereof is required. The manual rewind apparatus comprising a shaft arranged to extend into a housing of the disc brake wherein the continuous wear sensor is arranged to be located within the housing of the disc brake and is located proximate to the shaft.

Combination of the manual rewind apparatus and the continuous wear sensor into a single assembly results in a smaller overall component requiring less space in the housing thus resulting in improved packaging of the disc brake caliper.

In one embodiment, the continuous wear sensor is arranged as part of a single unit with the manual rewind apparatus.

Providing the continuous wear sensor and manual adjuster as a single unit enables easier fitting and removal to the system as both components are fitted/removed together.

In one embodiment, the adjuster assembly further comprises a cover arranged to mount the adjuster assembly to a housing of the disc brake.

In one embodiment, the cover further comprises a sleeve, wherein the sleeve substantially surrounds a portion of the shaft.

Further improves the packaging efficiency of the assembly.

In one embodiment, the shaft defines a longitudinal axis and the continuous wear sensor defines a longitudinal axis and the longitudinal axis of the shaft is substantially parallel to the longitudinal axis of the continuous wear sensor.

In one embodiment, the continuous wear sensor is mounted concentrically around the shaft.

Further improves the packaging efficiency of the assembly.

In one embodiment, the continuous wear sensor comprises a first part that is arranged to move in response to rotation of the shaft so as to indirectly sense the wear of a brake pad.

In one embodiment, the first part is arranged to move linearly or the first part is arranged to move rotationally with respect to a second part which remains substantially stationary.

In one embodiment, the first part is mounted such that rotation of the shaft causes threadable linear motion of the first part relative to the shaft, optionally wherein the shaft is threaded.

In one embodiment, the sleeve is arranged to prevent rotation of the first part.

In one embodiment, the continuous wear system further comprises a resilient element mounted between the first part and the second part.

In one embodiment, the second part is a load sensor.

A second aspect of the invention provides a disc brake assembly comprising a brake caliper having a housing and an adjuster assembly according to the first aspect of the invention wherein the continuous wear sensor is mounted to the housing via the adjuster assembly.

In one embodiment, the housing comprises a recess for mounting the shaft to the disc brake assembly.

In one embodiment, the adjuster assembly comprises a cover, the cover being arranged to mount the shaft and the continuous wear sensor to the housing.

### BRIEF DESCRIPTION OF THE DRAWINGS

Embodiments of the invention will now be described, by way of example only, with reference to the accompanying drawings, in which:
Figure 1 is a partially cut away isometric view of a disc brake assembly of the prior art;
Figure 2 is a cross sectional view of the disc brake assembly of Figure 1;
Figure 3 is an isometric view of a disc brake assembly housing having an adjuster assembly according to an embodiment of the invention;
Figure 4 is a cross sectional view of the disc brake assembly of Figure 3 on the plane 4-4; and
Figure 5 is an exploded isometric view of the adjuster assembly of Figures 3 and 4.

### DETAILED DESCRIPTION OF EMBODIMENT(S)

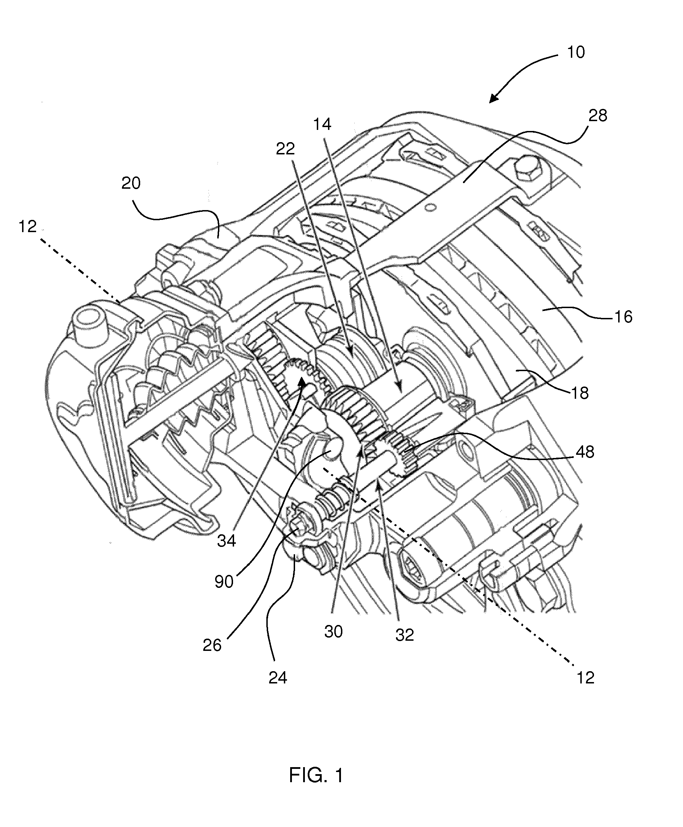

An exemplary disc brake of the prior art is illustrated in Figure 1 and is indicated generally at 10. Operation of such disc brakes is well known, but briefly, to apply the brake a force is applied to an operating shaft 90 which pivots about an offset pivot axis 12. The pivoting motion of the operating shaft moves one or more pistons 14 towards a brake rotor 16 via roller(s) mounted offset to the axis 12. The piston(s) 14 are connected to an inboard brake pad 18 such that axial movement of the pistons 14 axially moves the inboard brake pad 18 towards the brake rotor 16. Once the inboard pad 18 contacts the brake rotor 16, the force of reaction acting through a caliper housing 20 that houses the pistons 14 and pulls an outboard pad on to the brake rotor. As a result, the inboard and outboard pads 18 clamp the brake rotor 16 and generate a frictional drag force that retards rotation of the rotor. To release the brake, a return spring returns the pistons 14 and operating shaft back to their "brakes-off" positions, leaving the pads with a running clearance to the brake rotor 16.

The caliper housing 20 is a cast steel component in which various bores and mating faces etc. are subsequently machined.

The operating shaft is connected to an adjuster system 22 such that when the operating shaft pivots, if adjustment to account for wearing of the friction material is required, the operating shaft rotates the adjuster system. This rotation extends the pistons 14 outboard towards the brake rotor 16 so as to move the brake pads 18 towards the brake rotor 16 and bring the running clearance back into to desired range.

With reference to Figure 1, a separate electrical CWS 24 is typically fitted to the disc brake 10. The CWS 24 monitors the amount of friction material remaining on the pads 18, in order that users are aware of when the pads need replacing. The CWS 24 is typically linked to gears 30 of the adjuster system 22 that drive extension of the pistons 14.

When the pads 18 require replacement, a manual rewind apparatus 26 of an adjuster system 22 can be used to retract the pistons 14. A pad retainer 28 that extends across the pads is removed, and the worn pads are removed radially outwardly from the housing 20 with the housing in situ. However, because the replacement pads have a greater thickness of friction material compared to the worn pads the adjustment mechanism 22 needs to be de-adjusted or rewound to accommodate the new brake pads.

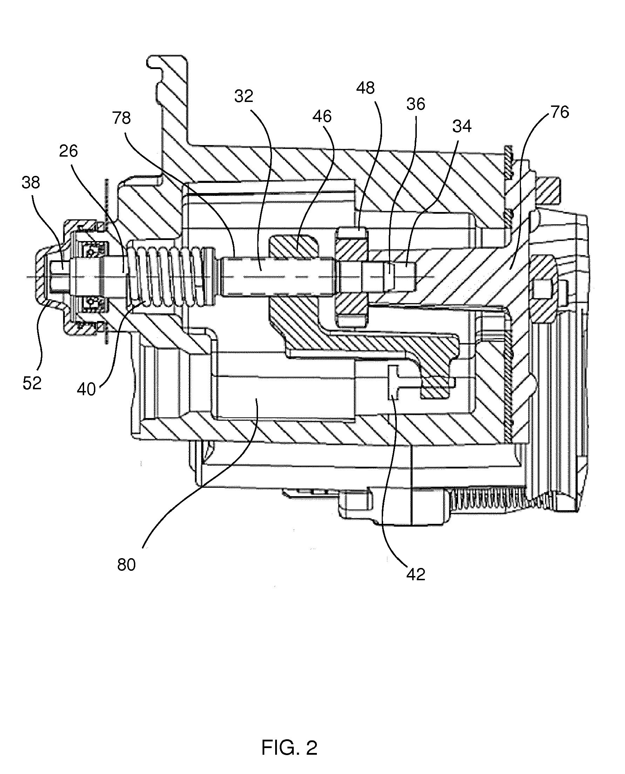

Referring to Figure 2, the disc brake of the prior art 10 is illustrated in more detail. The manual rewind apparatus 26 comprises a rewind shaft 32 that is connected to one of the gears 30 via a gear 48 secured to the shaft 32. Rotation of the manual rewind apparatus 26 results in rotation of the gear 30 via the gear 48 which in turn retracts an outer part of the piston relative to an inner part of the piston 14, the two parts being threaded together. A gear 34 rotationally connects the piston 14 to a further piston (not shown) and transfers the rewind rotation/retraction to the further piston.

An innermost (outboard) end 36 of the shaft 32 is rotatably mounted in a bore 34 of a cover plate 76 of the disc brake 10. The innermost end of the shaft 32 is positioned within the housing 20. The outermost (inboard) end 38 of the shaft protrudes from the housing 20 of the disc brake 10 and is provided with a hex head to engage with a tool such as a spanner or a wrench (not shown). The outermost end of the shaft 32 is covered with a sealing cap 52 which clips directly on to the housing 20 and the shaft 32 is supported for rotation within a bore 78. The adjuster system 22 is further provided with a return spring 40. The spring 40 also ensures that the shaft 32 is urged against the recess 34 of the cover plate 76, thus maintaining the desired axial position of the shaft 32 and also works to return the components, such as the spring 166, of the adjuster assembly back to their default position(s) when the load is removed. The manual rewind apparatus is assembled and replaced from the outboard side of the housing 20, by removal of the cover plate 76, which in turn means this must be done with the caliper housing being removed from the vehicle to which it is fitted.

The CWS 24 is separate to adjuster system 22 and is mounted to the housing 20 adjacent to but offset from the adjuster system via a separate bore 80 parallel to the bores 34 and 78. The CWS 24 is provided with a sensor (not shown), in the form of a linear potentiometer, located proximate an innermost end of the CWS The bore 80 configured to receive the CWS 24 includes a substantially flat datum surface 42 that is used as a reference point for the sensor. The surface 42 is mounted to the housing via screw thread and so the position of the surface 42 can be adjusted within the housing. The adjustment of the position of the sensor 42 enables the fine tuning of the CWS 24 to a calibrated value.

As the adjuster system 22 adjusts the position of the brake pads 18 to account for wear thereof. A component 46 extends between and substantially connects the bore 78 to the bore 80. The component is fixed with respect to the shaft 32 and so movement of the shaft 32 within the housing 20 changes the relative position of components 46 and the gear 48. The sensor 42 is configured to measure this change in separation to provide an indication of the wear of the brake pad 18, and electronically transmit this to a remote location on the vehicle to which the brake 10 is fitted.

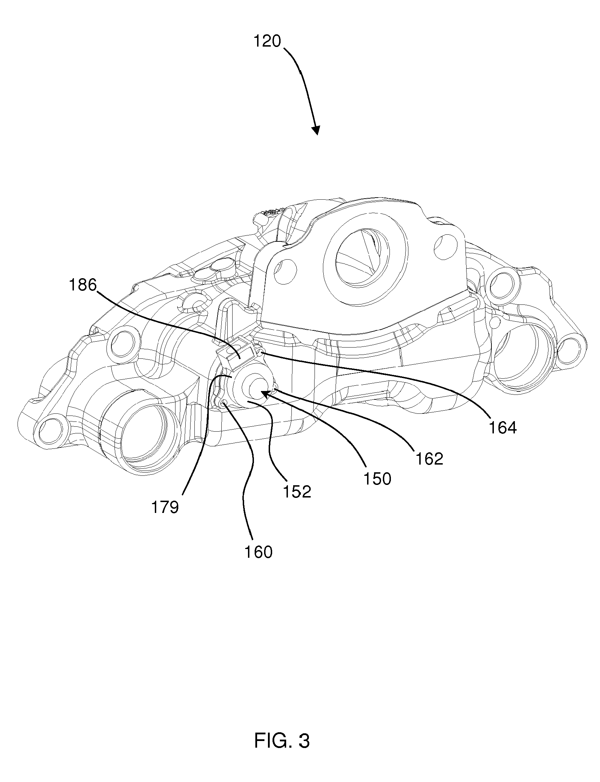

Referring now to Figures 3 to 5, a disc brake caliper housing indicated generally at 120 comprises an adjuster assembly 150 according to an embodiment of the present invention. The adjuster assembly 150 essentially combines a manual rewind apparatus and a CWS into a single assembly that can be fitted and removed from the brake caliper housing as a single unit. The housing 120 is similar to that of the disc brake of Figures 1 and 2. Corresponding components of the figures are labelled with the prefix '1' with respect to Figures 1 and 2, and only differences are discussed.

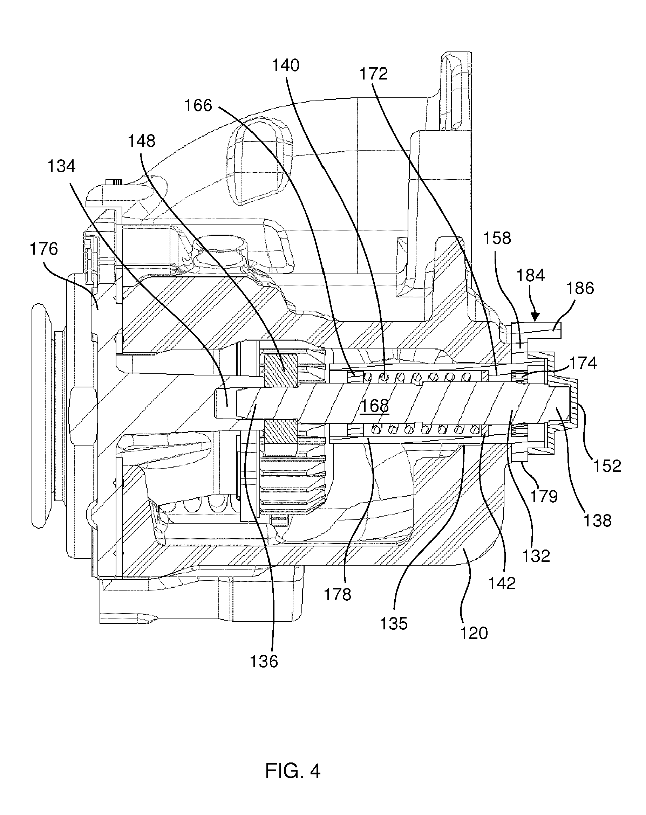

Referring to Figure 3 and 4, the adjuster assembly 150 is inserted into a recess 182 of the housing defined by bore 135 through the housing 120 and bore 134 in the cover plate 176. The bore 135 of the housing 120 provides support for the adjuster assembly 150.

An outermost end 138 of the shaft 132 extends outward from the recess and is covered by a cap 152. The manual adjuster assembly 150 is further provided with a cover 184 which substantially surrounds a portion of the shaft 132. The cover 184 also protrudes from the recess of the housing 120. A sleeve 178 of the cover 184 is accommodated within the housing 120 and a head 179 projects out of the housing. The cap 152 is mounted so as to substantially cover the end of the shaft 132 and part of the head 179. In this embodiment, the cap 152 is mounted directly onto the cover 184 rather than the housing 120 thus simplifying manufacture of the housing by not requiring a spigot to be provided therein to mount the cap.

The cover 184 is advantageously manufactured as a plastics component, e.g. as an injection moulding from a suitable material such as ABS, Nylon or polypropylene. As such, relatively complex shapes may be manufactured at low cost, and the material is durable and corrosion resistant.

The junction between the sleeve 178 and head 179 of the cover 184 comprises a circumferential lip 158 to seat on an outer face of the housing 120. The circumferential lip 158 comprises three radial protrusions 160, 162, 164 around its outer edge. Each of the protrusions 160, 162, 164 has apertures therein to receive fasteners therethrough so as to secure the cover 184 to the housing 120 of the disc brake 110. An O-ring type seal (not shown) and/or a kit bead gasket (not shown) may be provided in some embodiments between the 158 and the housing 120.

A fourth protrusion 186 comprises an electrical connector having a socket to mate with a complementary connector on a vehicle to which the brake is fitted and enable electrical signals to be transmitted from a sensor to an ECU (not shown) of the vehicle so as to provide an operator with readings relating to the wear of the brake pads 118. In alternative embodiments, a cable or lead having a connector at its distal end to mate with a complementary connector on a vehicle could be provided instead of the protrusion 186.

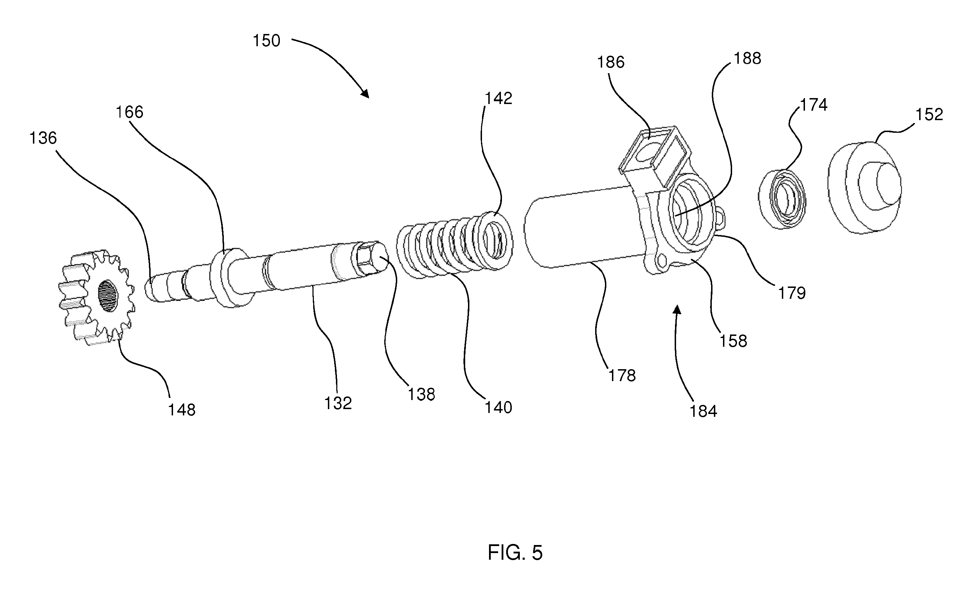

Referring now to Figures 4 and 5, the adjuster assembly 150 is shown in more detail. The substantially cylindrical shaft 132 has a diameter that is stepped along its length. The innermost end 136 of the shaft 132 is tapered so as to enable easier insertion of the adjuster assembly 150 into the bore 134 of the cover plate 176. The outermost end 138 of the shaft 132 is profiled so as to receive a hand or power tool (not shown) thereon so as to rotate the adjuster assembly 150 and hence the adjuster system of the disc brake 110 when the brake pads need to be removed.

A gear 148 is provided proximate the innermost end 136 of the shaft 132 and is rotationally fixed with respect to the shaft 132. A middle section of the shaft 132 has a helical compression spring 140 arranged therearound.

The middle section of the shaft 132 is further provided with a screw thread (not shown) on the outer surface thereof and a nut 166 mounted thereon so as to engage with the screw thread of the shaft 132. The cover 184 is further provided with a substantially cylindrical sleeve 178 arranged to as to surround the spring 140 and a portion of the shaft 132.

The nut 166 has a non-circular radial outer face and the internal face of the sleeve 178 is profiled to be complementary and engage with the nut 166 and prevent rotation of the nut with respect to the sleeve 178. This results in a system where rotation of the shaft 132 results in in a linear change in the position of the nut 166 along the longitudinal axis of the shaft due to the relative rotation thereof.

A bearing 168 of the sleeve 178 receives the shaft 132 and permits its free rotation.

The sleeve 178 comprises a counterbore 172. A load sensor 142 is position so as to abut against a step 172 defined by the counterbore. The spring 140 is positioned so as to be loaded between the nut 166 and the load sensor 174.

An adjuster assembly seal 174 is located in a second counterbore 188 in the head 179 so as to seal around the shaft 132. The cover further comprises a circular lip 175 projecting inboard and arranged to receive the cap 152.

In use, as the brake pads become worn through repeated use, the adjuster system of the disc brake automatically extends the pistons to maintain a suitable running clearance between the brake pads and the rotor.

The gear 148 of the adjuster assembly engages with a gear of the adjuster system and this adjustment causes rotation of the gear 148 and hence the shaft 132. The sleeve 178 works so as to prevent the nut 166 from rotating and so this results in the shaft 132 rotating with respect to the nut 166 and causes the nut 166 to move in a direction parallel to the longitudinal axis of the shaft 132 towards the outermost end 138 of the shaft 132.

This movement of the nut 166 in turn changes the separation between the nut 166 and the load sensor 174 compressing the spring 140, resulting in an increased load applied to the load sensor 174 by the spring. The load sensor 174 outputs a signal indicative of the wear of the brake pads based on the load applied to it by the spring 140. Thus, the spring 140 of the adjuster assembly 150 provides the dual functions of sensing the wear of the pads and also urges the shaft 132 inwardly so that it securely abuts against the recess 134 of the cover plate 176.

When the brake pads are required to be replaced, an operator removes the cap 152 and uses a tool to rotate the shaft 132 and gear 148. This in turn rotates the gears of the adjuster system and resets the position of the brake pads to allow new, thicker pads to be inserted when the pads need to be replaced.

The adjuster assembly 150 is able to be fitted, and hence removed, as a single unit and it is only the gear 148 that remains inside the housing 120 when the adjuster assembly is removed. In this embodiment, the coverplate 176 is required to be removed so as to remove the gear 148. However, in alternative embodiments the bore 168 has a greater diameter and/or the gear 148 a smaller diameter so that the whole adjuster assembly 150 including the gear can be fitted and removed as a single unit from the inboard side rather than the rotor side of the brake.

In alternative embodiments, the shaft 132 and the gear 148 may be releasably secured to the housing 120 so as to be retained inside the housing 120 during replacement of the adjuster assembly 150. This arrangement would remove the need for calibration of the adjuster assembly 150 to be carried out after replacement, as the position of the nut 166 along the shaft 132 has remained fixed with respect to the amount of pad wear during the replacement process.

Although the invention has been described above with reference to one or more preferred embodiments, it will be appreciated that various changes or modifications may be made without departing from the scope of the invention as defined in the appended claims.

In the embodiment described above, the spring 140 is in an uncompressed state when new brake pads are fitted and the spring is compressed as the brake is adjusted for wear of the pads. However, the spring may be in a compressed state when new brake pads are fitted and then decompresses as the pads wear through use.

In alternative arrangements, different sensing mechanisms may also be used in place of the spring and load sensor, such as a linear potentiometer, a hall effect sensor, a rotation sensor, a laser or any suitable component for measuring linear or rotary movement.

In alternative arrangements, any suitable resilient mechanism may be used to urge the shaft 132 inwardly to maintain its position.

## Claims

1. An adjuster assembly for manually adjusting the position of a brake pad relative to a brake rotor of a disc brake, the assembly comprising:
a continuous wear sensor; and
a manual rewind apparatus to manually reset the position of the brake pad when replacement thereof is required;
the manual rewind apparatus comprising a shaft arranged to extend into a housing of the disc brake;
wherein the continuous wear sensor is arranged to be located within the housing of the disc brake and is located proximate to the shaft.

2. An adjuster assembly according to claim 1 wherein the continuous wear sensor is arranged as part of a single unit with the manual rewind apparatus.

3. An adjuster assembly according to any preceding claim, further comprising a cover arranged to mount the adjuster assembly to a housing of the disc brake.

4. An adjuster assembly according to claim 3, wherein the cover further comprises a sleeve, wherein the sleeve substantially surrounds a portion of the shaft.

5. An adjuster assembly according to any preceding claim, wherein the shaft defines a longitudinal axis and the continuous wear sensor defines a longitudinal axis and the longitudinal axis of the shaft is substantially parallel to the longitudinal axis of the continuous wear sensor.

6. An adjuster assembly according to any preceding claim, wherein the continuous wear sensor is mounted concentrically around the shaft.

7. An adjuster assembly according to preceding claim wherein the continuous wear sensor comprises a first part that is arranged to move in response to rotation of the shaft so as to indirectly sense the wear of a brake pad.

8. An adjuster assembly according to claim 7, wherein the first part is arranged to move linearly or the first part is arranged to move rotationally with respect to a second part which remains substantially stationary.

9. An adjuster assembly according to any preceding claim, wherein the first part is mounted such that rotation of the shaft causes threadable linear motion of the first part relative to the shaft, optionally wherein the shaft is threaded.

10. An adjuster assembly according to claim 9, when dependent on claim 4 wherein the sleeve is arranged to prevent rotation of the first part.

11. An adjuster assembly according to any one of claims 7 to 10, wherein the continuous wear system further comprises a resilient element mounted between the first part and the second part.

12. An adjuster assembly according to claim 11, wherein the second part is a load sensor.

13. A disc brake assembly comprising:
a brake caliper having a housing; and
an adjuster assembly according to any preceding claim;
wherein the continuous wear sensor is mounted to the housing via the adjuster assembly.

14. A disc brake assembly according to claim 13, wherein the housing comprises a recess for mounting the shaft to the disc brake assembly.

15. A disc brake assembly according to claim 14, wherein the adjuster assembly comprises a cover, the cover being arranged to mount the shaft and the continuous wear sensor to the housing.
